# FASCICULE DE BREVET EUROPEEN

(11) **EP 2 580 145 B1**
(45) Date de publication et mention de la délivrance du brevet: **20.05.2015**
(21) Numéro de dépôt: 11735489.4
(22) Date de dépôt: 14.06.2011
(51) Int. Cl.: B65D 85/804

(54) **CAPSULE POUR L'EXTRACTION D'UNE BOISSON SOUS PRESSION**
KAPSEL ZUR DRUCKEXTRAKTION EINES GETRÄNKS
CAPSULE FOR THE PRESSURIZED EXTRACTION OF A BEVERAGE

(30) Priorité: 01.06.2011 EP 11305679; 01.06.2011 EP 11305680; 16.12.2010 EP 10306436; 16.12.2010 EP 10306432; 11.06.2010 FR 1054653; 11.06.2010 FR 1054652; 11.06.2010 FR 1054651
(43) Date de publication de la demande: 17.04.2013
(73) Titulaire: Frydman, Alain, 75008 Paris (FR)
(72) Inventeur: Frydman, Alain, 75008 Paris (FR)
(74) Mandataire: Blot, Philippe Robert Emile
(86) Numéro de dépôt international: PCT/FR2011/051343
(87) Numéro de publication internationale: WO 2012/010760

(56) Documents cités:
- EP-A1- 1 767 467
- EP-A1- 1 982 933
- EP-A1- 2 210 827
- WO-A2-2005/066040
- DE-U1-202009 009 127

## Description

La présente invention concerne une capsule pour l'extraction d'une boisson sous pression, du type comprenant un corps en forme de coupelle et un opercule délimitant ensemble une chambre contenant une substance pour la préparation d'une boisson, le corps comprenant une paroi latérale extérieure sensiblement tronconique et un fond venu de matière avec la paroi latérale et fermant la paroi latérale extérieure à une extrémité arrière du corps, l'opercule fermant la paroi latérale extérieure à l'extrémité avant du corps, la capsule étant adaptée pour être disposée dans un dispositif d'extraction de sorte qu'un liquide d'extraction sous pression pénètre dans la capsule par le fond et en sorte par l'opercule.

FR 2 373 999 décrit une telle capsule destinée à être utilisée dans un dispositif d'extraction de boissons, afin de produire une boisson telle que du café.

Il existe un risque qu'une telle capsule s'affaisse lors de la fermeture du dispositif d'extraction de boisson et/ou de l'injection du liquide sous pression

En outre, de telles capsules sont particulièrement chères à produire, en particulier quand elles sont produites en grandes séries.

Enfin, lorsqu'une telle capsule est utilisée dans un dispositif d'extraction comportant un logement de réception de la capsule et un support contre lequel est appliquée la capsule, l'opercule est plaqué contre le support, ce qui empêche un écoulement satisfaisant du liquide à travers la capsule.

Un but de l'invention est de fournir une capsule permettant de limiter le risque d'affaissement tout en permettant l'extraction d'une boisson. D'autres buts de l'invention sont de proposer une capsule pouvant être facilement calibrée de façon à ajuster le niveau de pression auquel le liquide d'extraction pénètre dans la capsule, de proposer une capsule à coût réduit, et de fournir une capsule compatible avec de nombreux dispositifs d'extraction de boisson.

A cet effet, l'invention concerne une capsule pour l'extraction d'une boisson, du type comprenant une paroi latérale s'étendant suivant un axe, une paroi d'entrée fermant une première extrémité de la paroi latérale et une paroi de sortie fermant une deuxième extrémité de la paroi latérale, délimitant une chambre de réception d'une substance pour la préparation d'une boisson, caractérisée en ce que la paroi d'entrée est prévue pour se rompre sous l'effet d'un fluide sous pression et comprend une portion de fond et une zone de moindre résistance prévue pour se rompre sous l'effet d'un fluide sous pression située à la périphérie de la portion de fond.

Selon d'autres modes de réalisation, la capsule comporte une ou plusieurs des caractéristiques suivantes, prise(s) isolément ou suivant toute(s) combinaison(s) techniquement possible(s) :
- la zone de moindre résistance s'étend axialement ;
- la portion de fond est disposée axialement en retrait vers l'intérieur de la capsule par rapport à une portion périphérique de la paroi d'entrée ;
- la paroi d'entrée comprend une portion axiale s'étendant suivant l'axe en rentrant vers l'intérieur de la capsule, la périphérie de la portion de fond étant reliée à une extrémité axiale de la portion axiale située vers l'intérieur de la capsule, par la zone de moindre résistance ;
- la zone de moindre résistance prolonge axialement la portion axiale ;
- la zone de moindre résistance possède une épaisseur inférieure à celle de la portion axiale ;
- la portion de fond est un dôme ;
- le dôme est à concavité tournée vers l'intérieur de la capsule ;
- le dôme est à action brusque et prévu pour se retourner brusquement sous l'effet d'un fluide sous pression ;
- la paroi de sortie et la paroi latérale comprennent des reliefs complémentaires d'encliquetage ;
- la paroi de sortie comprend une nervure de fixation prévue sur une tranche de la paroi de sortie et la surface interne de la paroi latérale comprend une gorge de fixation complémentaire ;
- la paroi de sortie comprend un cadre périphérique de fixation et un filtre s'étendant en travers du cadre ;
- le filtre comprend des orifices ;
- le cadre et le filtre sont venus de matière ou le cadre est rapporté sur le filtre ;
- elle comprend une membrane d'étanchéité recouvrant la paroi de sortie ;
- elle comprend un rebord annulaire entourant la deuxième extrémité de la paroi latérale et s'étendant radialement vers l'extérieur à partir de la deuxième extrémité de la paroi latérale, la paroi latérale et la paroi d'entrée étant venues de matière et réalisée dans une première matière, et le rebord étant formé d'une deuxième matière plastique, différente de la première matière plastique ; et
- la paroi latérale et la paroi d'entrée sont venues de mattière et définissent un corps réalisé d'un seul tenant en forme de coupelle.

L'invention concerne également un système comprenant une capsule telle définie ci-dessus et un dispositif d'extraction comportant un logement destiné à recevoir la capsule et un conduit d'amenée de liquide d'extraction sous pression dans le logement.

L'invention sera mieux comprise à la lecture de la description qui va suivre, donnée uniquement à titre d'exemple et faite en se référant aux dessins annexés, sur lesquels :
- la Figure 1 représente une vue en perspective d'une première variante d'une capsule selon un premier mode de réalisation non conforme à l'invention ;
- la Figure 2 est une vue en coupe longitudinale de la capsule de la Figure 1 ;
- la Figure 3 est une vue de face de la capsule de la Figure 1 ;
- les Figures 4 et 5 sont des vues de la capsule de la Figure 1, installée dans un dispositif d'extraction en configurations respectivement partiellement ouverte et fermée ;
- la Figure 6 est une vue en coupe longitudinale d'une seconde variante de la capsule selon le premier mode de réalisation ;
- la Figure 7 est une vue en coupe longitudinale d'une troisième variante de la capsule selon le premier mode de réalisation ;
- la Figure 8 est une vue de la capsule de la Figure 6, installée dans un dispositif d'extraction en configuration fermée ;
- la Figure 9 est une vue en perspective d'une première variante d'une capsule selon un deuxième mode de réalisation conforme à l'invention ;
- la Figure 10 est une vue en coupe longitudinale de la capsule de la Figure 9 ;
- la Figure 11 est une vue de derrière de la capsule de la Figure 9 ;
- la Figure 12 est une vue d'un détail marqué XII sur la Figure 10 ;
- la Figure 13 est une vue d'un détail marqué XIII sur la Figure 10 ;
- la Figure 14 est une vue de la capsule de la Figure 8, installée dans un premier dispositif d'extraction en configuration fermée ;
- la Figure 15 est une vue similaire à la Figure 14, la capsule étant installée dans un deuxième dispositif d'extraction en configuration fermée ;
- la Figure 16 est une vue en coupe longitudinale d'une deuxième variante d'une capsule selon le deuxième mode de réalisation ;
- la Figure 17 est une vue d'un détail marqué XVII sur la Figure 16 ;
- la Figure 18 est une vue de derrière d'une troisième variante, non conforme à l'invention, d'une capsule selon le deuxième mode de réalisation ;
- la Figure 19 est une vue de derrière d'une quatrième variante, non conforme à l'invention, d'une capsule selon le deuxième mode de réalisation ;
- la Figure 20 est une vue de derrière d'une cinquième variante d'une capsule selon le deuxième mode de réalisation ;
- la Figure 21 est une vue de derrière d'une sixième variante d'une capsule selon le deuxième mode de réalisation ;
- la Figure 22 est une vue de derrière d'une septième variante d'une capsule selon le deuxième mode de réalisation ;
- la Figure 23 représente une vue en coupe d'une capsule selon un troisième mode de réalisation conforme à l'invention ;
- la Figure 24 est une vue de face d'une paroi de sortie de la capsule de la Figure 23;
- la Figure 25 est une vue en coupe d'une paroi de sortie selon une variante d'une capsule selon le troisième mode de réalisation ;
- la Figure 26 est une vue de face d'une paroi de sortie selon une autre variante d'une capsule selon le troisième mode de réalisation ; et
- la Figure 27 est une vue en coupe d'un dispositif d'extraction dans lequel est inséré la capsule de la Figure 23.

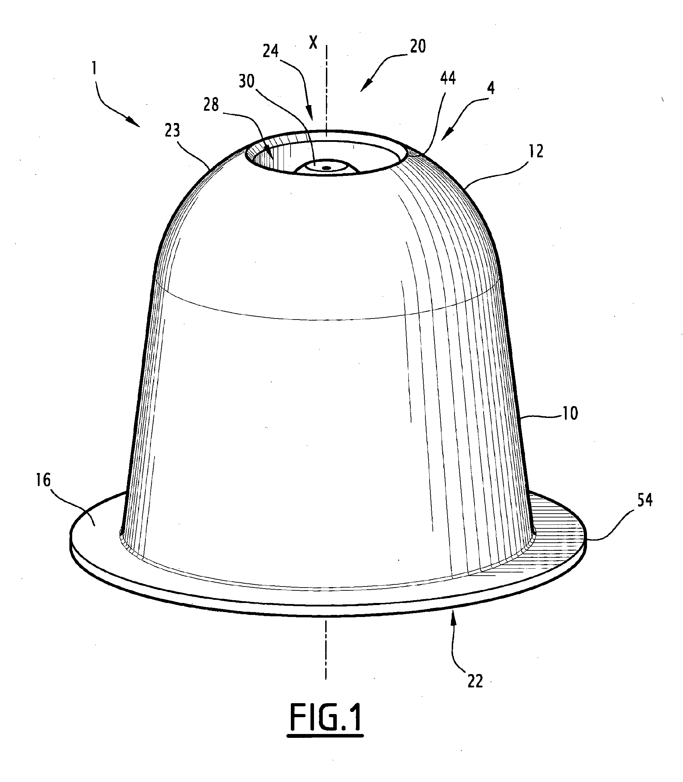

La capsule 1 selon le premier mode de réalisation, représentée sur les Figures 1 à 3, comporte un corps 4 creux et un opercule 6 de sortie délimitant ensemble une chambre 8 intérieure contenant une substance (non représentée) pour la préparation d'une boisson.

Le corps 4 présente une forme générale de coupelle et comprend une paroi latérale 10, un fond 12 fermant une extrémité arrière 20 fermée du corps 4, et un rebord annulaire 16 entourant une extrémité avant 22 ouverte du corps 4.

Le corps 4 est réalisé d'un seul tenant. La paroi latérale 10, le fond 12 et le rebord annulaire 16 sont venus de matière. Le corps 4 est réalisé en un matériau étanche à l'air et à l'eau, par exemple dans un matériau plastique ou dérivé du plastique, ou en métal.

La paroi latérale 10 s'étend à partir du fond 12 suivant un axe longitudinal X jusqu'à l'extrémité avant 22 du corps 4.

La paroi latérale 10 comprend un épaulement intérieur 14. L'épaulement 14 s'étend dans un plan radial et est orienté vers l'avant.

La paroi latérale 10 est sensiblement tronconique de révolution autour de l'axe longitudinal X. La paroi latérale 10 comprend un tronçon arrière 18, relativement souple, s'étendant à partir du fond 12 et un tronçon avant 19, relativement rigide, prolongeant axialement le tronçon arrière 18. Le tronçon avant 19 présente une épaisseur croissante axialement, supérieure à celle du tronçon arrière 18.

Le fond 12 présente une région périphérique 23, s'étendant radialement vers l'intérieur à partir de la paroi latérale 10, et une région centrale 24.

La région périphérique 23 est arrondie. Elle s'étend radialement vers l'intérieur et axialement vers l'arrière à partir de la paroi latérale 10, et présente une concavité tournée vers l'intérieur du corps 4.

La région centrale 24 comprend une nervure annulaire 26 faisant saillie axialement vers l'intérieur du corps 4 à partir de la région périphérique 23. La nervure annulaire 26 définit une tranchée annulaire 28 ouverte à l'extérieur du corps 4 vers l'arrière. La nervure annulaire 26 définit un plot central 30 creux faisant saillie axialement à partir du fond de la tranchée annulaire 28 en définissant un évidement à l'intérieur du corps 4.

La région centrale 24 présente au moins une zone de moindre résistance 32 prévue pour rompre sous l'effet d'un fluide sous pression. Les zones de moindre résistance 32 sont prévues par exemple sous la forme de zones de moindre épaisseur de la région centrale 24, définies par exemple par des indentations ménagée dans la région centrale 24.

Les zones de moindre résistance 32 sont prévues dans des parois de la nervure annulaire 26 et/ou sur le plot central 30.

Dans l'exemple illustré, la nervure annulaire 26 comprend une portion externe 36 tubulaire s'étendant axialement vers l'intérieur à partir de la région périphérique 23, une portion interne 34 tubulaire délimitant une face latérale du plot central 30 et une portion de fond 38 s'étendant radialement entre la portion externe 36 et la portion interne 34 en conférant à la nervure annulaire 26 une section transversale sensiblement en forme de « U ».

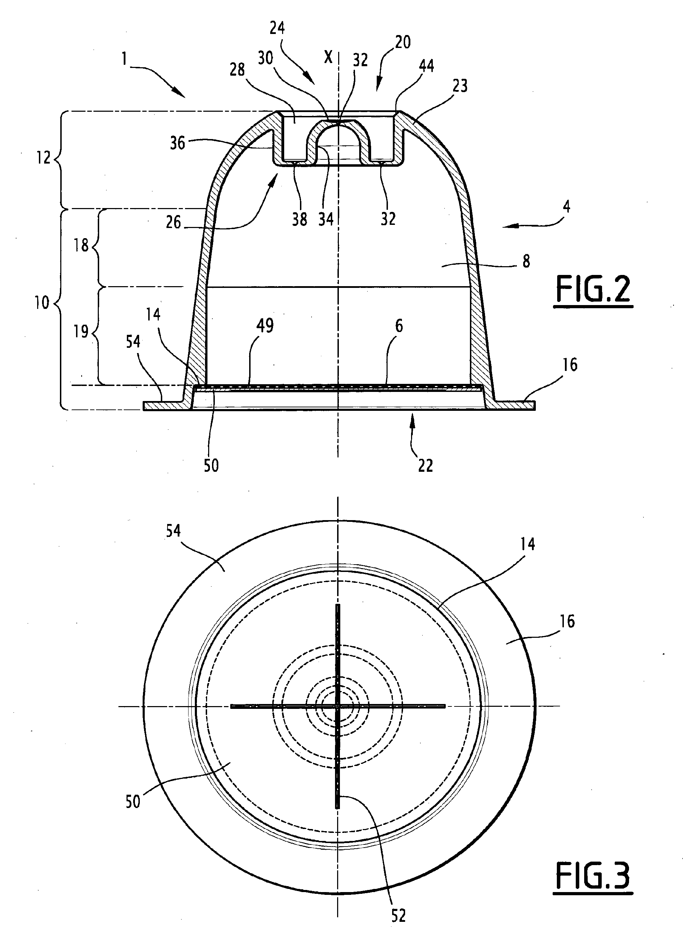

Comme représenté sur la Figure 2, des zones de moindre résistance 32 sont prévues dans la portion de fond 38 et dans le plot central 30 sous la forme de zones de moindre épaisseur.

En variante, la région centrale 24 est dépourvue de zone de moindre résistance 32 dans le plot central 30. En variante ou en option, la nervure annulaire 26 possède des zones de moindre résistance 32 dans la portion externe 36 et/ou la portion interne 34.

Dans une autre variante possible différente de celle de la figure 2 par la forme de la nervure annulaire 26, la portion externe 36 et la portion interne 34 convergent en conférant à la nervure annulaire 26 une section transversale sensiblement en forme de « V ». Dans ce cas, des zones de moindre résistance 32 peuvent être prévues dans la portion externe 36, la portion interne 34 et/ou le plot central 30.

Comme représenté sur la Figure 2, la tranchée annulaire 28 présente un bord extérieur 44 anguleux, de préférence biseauté, à la jonction entre la nervure annulaire 26 et la région périphérique 23. Le bord extérieur 44 délimite l'extrémité arrière 20 de la capsule 1. Le plot central 30 est axialement en retrait vers l'intérieur du corps 4 par rapport au bord extérieur 44.

De préférence, la région périphérique 23 possède une surépaisseur le long du bord extérieur 44, de façon à renforcer le bord extérieur 44. La région périphérique 23 présente par exemple une épaisseur croissante depuis la paroi latérale 10 vers le bord extérieur 44.

L'épaulement interne 14 est annulaire et fait saillie radialement depuis la paroi latérale 10 vers l'intérieur du corps 4. Il est en retrait axialement vers l'intérieur du corps 4 par rapport à l'extrémité avant 22 du corps 4 et au rebord annulaire 16.

L'opercule 6 est fixé par sa périphérie sur l'épaulement interne 14 de sorte que l'opercule 6 est disposé en retrait axialement vers l'intérieur du corps 4 par rapport à l'extrémité avant 22 du corps 4. De préférence, la distance de retrait de l'opercule 6 par rapport à l'extrémité avant 22 du corps 4 est supérieure à 1 mm.

L'opercule 6 ferme l'extrémité avant 22 du corps 4.

L'opercule 6 comprend un filtre 49 de sortie propre à laisser passer un fluide sous pression en retenant la substance contenue dans la chambre 8. Le filtre 49 est en papier filtre poreux, en matériau plastique tissé ou en film plastique perforé.

L'opercule 6 comprend en outre une membrane 50 étanche à l'air et à l'eau doublant le filtre 49. La membrane 50 présente des lignes d'affaiblissement 52, de sorte que la membrane 50 est propre à se déchirer sous le seul l'effet de la pression d'un liquide. Dans l'exemple représenté sur les Figures 1 et 3, les lignes d'affaiblissement 52 forment une croix. En variante, elles forment un cercle, des arcs de cercle, ou toute autre forme adaptée pour permettre un déchirement optimal de la membrane 50.

Le filtre 49 est disposé entre la chambre 8 et la membrane 50. Le filtre 49 et la membrane 50 sont accolés l'un à l'autre. Le filtre 49 et la membrane 50 se présentent par exemple sous la forme d'un film complexe bicouche.

Le rebord annulaire 16 s'étend radialement vers l'extérieur à partir de la paroi latérale 10. Le rebord annulaire 16 définit l'extrémité avant 22 du corps 4. Le rebord 16 présente une région marginale 54 libre. Il ne supporte pas d'élément d'étanchéité rapporté ou de relief d'étanchéité déformable. Tel que représenté sur les figures 1 à 3, le rebord annulaire 16 est sensiblement plan.

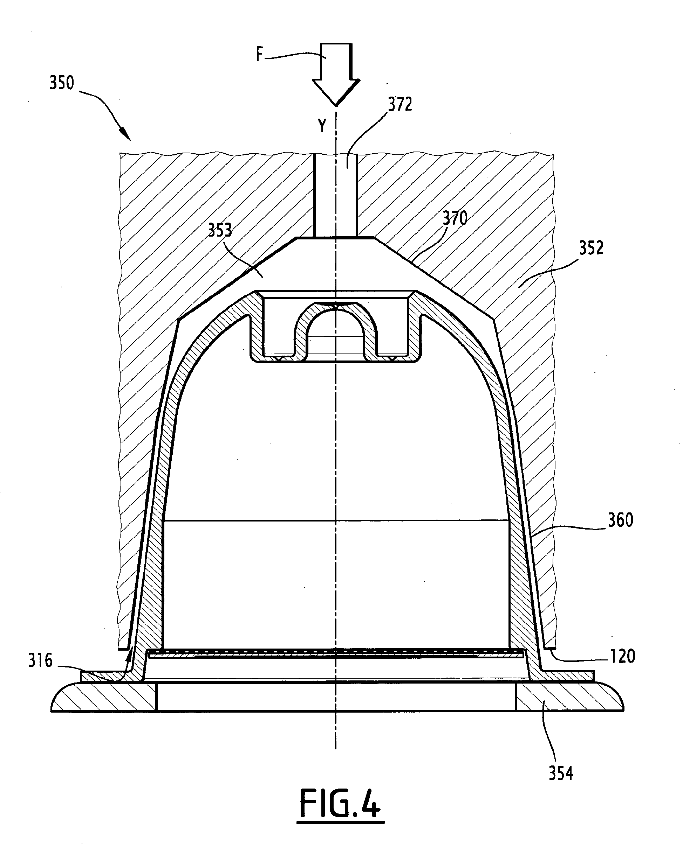

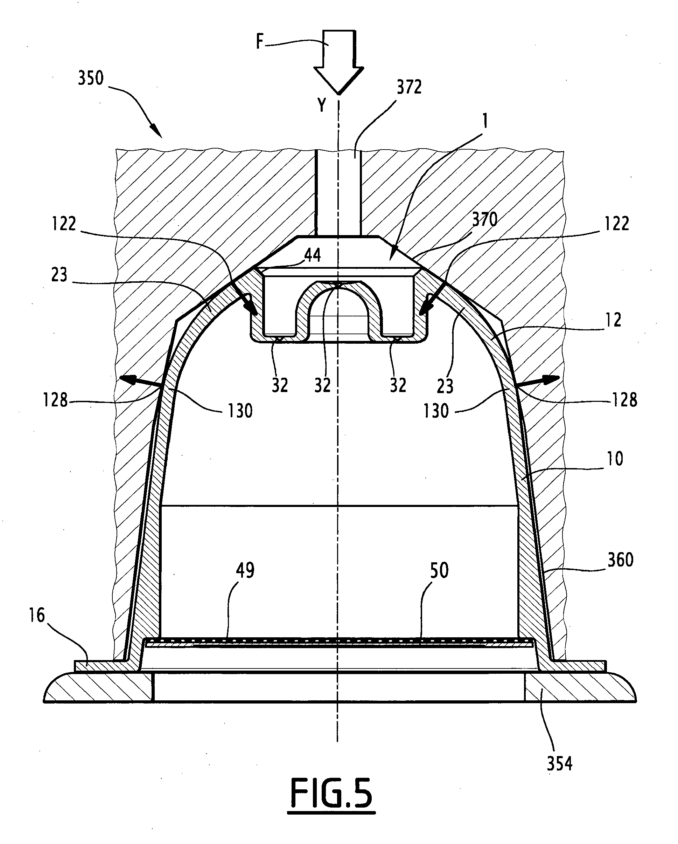

La capsule 1 est destinée à être disposée dans un dispositif d'extraction 350, représenté sur les Figures 4 et 5.

Le dispositif d'extraction 350 comporte un élément de réception 352 creux, délimitant un logement 353 de réception du la capsule 1, et un support 354. Il est propre à être manoeuvré entre une configuration ouverte dans laquelle l'élément de réception 352 et le support 354 sont mutuellement écarté pour introduire la capsule 1 dans l'élément de réception 352, et une position fermée, représentée sur la Figure 5, dans laquelle l'élément de réception 352 et le support 354 sont mutuellement rapprochés, pour injecter le liquide d'extraction dans la capsule 1. Sur la Figure 4, le dispositif 350 est représenté dans une configuration intermédiaire dans laquelle il est partiellement ouvert, mais toutefois pas suffisamment ouvert pour permettre l'introduction de la capsule 1.

Le logement 353 présente une face latérale intérieure 360, un fond de logement 370 et un conduit 372 d'amenée de liquide d'extraction débouchant sur le fond de logement 370, sensiblement au centre et une ouverture 316 d'introduction de la capsule 1.

La face latérale intérieure 360 est de révolution autour d'un axe longitudinal Y. Sur l'exemple représenté, elle est sensiblement tronconique. Lorsque la capsule 1 est placée dans le dispositif d'extraction 350, les axes longitudinaux X de la capsule 1 et Y du logement 353 se confondent sensiblement.

L'élément de réception 352 présente un bord annulaire 380 entourant l'ouverture 316.

La capsule 1 présente une longueur axiale suffisante pour que, en configuration fermée du dispositif d'extraction 350, la capsule 1 soit en appui par son rebord annulaire 16 contre le support 354 et par son fond 12 contre le fond de logement 370 suivant une ligne de contact annulaire fermée 122, définie de préférence sur la région périphérique 23 le long du bord extérieur 44 de la tranchée annulaire 28.

La capsule 1 est avantageusement adaptée pour se déformer élastiquement sous l'effet d'une force axiale F de compression pour assurer un contact suffisant entre le fond 12 et le fond de logement 370.

En option la capsule 1 est adaptée pour que, sous l'effet de la force axiale F de compression, au moins une zone annulaire 130 du fond 12 et/ou de la paroi latérale 10 de la capsule 1 se dilate radialement vers l'extérieur de façon à assurer un contact 128 supplémentaire avec la face latérale 360 du logement 353, suivant une ligne de contact annulaire fermée.

Le procédé d'extraction de la capsule 1 par le dispositif d'extraction 350 va maintenant être décrit.

La capsule 1 est d'abord placée dans le dispositif 350 en configuration ouverte, puis le dispositif 350 est manoeuvré pour se déplacer en configuration fermée.

Lors de ce déplacement vers la configuration fermée, la capsule 1 vient en appui par son rebord annulaire 16 contre le support 354 puis l'élément de réception 352 appuie axialement sur le fond 12 de la capsule 1, de sorte que le contact 122 se crée, et le corps 4 se déforme dans son ensemble de sorte que le contact 128 se crée avec l'élément de réception 352 du dispositif 350.

Une fois le dispositif 350 en configuration fermée, le fluide d'extraction est injecté sous pression par le conduit 372. Sous l'effet de la pression du fluide d'extraction, les zones de moindre résistance 32 de la région centrale 24 du fond 12 se rompent et le fluide d'extraction pénètre dans la capsule 1.

La pression de liquide dans la capsule 1 augmente alors et, sous l'effet de cette pression, la membrane de sortie 50 se déchire. Le fluide s'échappe alors hors de la capsule 1 en traversant l'opercule 6 en étant filtré par le filtre 49.

Grâce à la capsule décrite ci-dessus, le fond renforcé par une nervure annulaire permet de réaliser le corps de la capsule en un matériau relativement souple, déformable, sans que le fond ne s'effondre vers l'intérieur de la capsule sous l'effet de la pression de fluide. La convexité du fond permet de définir un fond résistant et déformable élastiquement, avec un volume de la chambre important permettant de charger une plus grande quantité de substance dans la capsule. La nervure délimitant dans la face extérieure une tranchée annulaire permet d'améliorer l'injection du liquide d'extraction dans la capsule. La présence d'un rebord annulaire permet d'augmenter la stabilité de la capsule sur le support du dispositif d'extraction.

La capsule possède un corps en forme de coupelle dont le fond est étanche à l'air et à l'eau, le corps étant fermé par un opercule étanche à l'air et à l'eau. L'étanchéité de la capsule permet de conserver la substance à l'abri de l'air et de l'humidité. L'opercule possède une membrane se déchirant sous l'effet du fluide sous pression permettant une ouverture appropriée de l'opercule à partir d'un niveau de pression déterminé, avec un effet retard bénéfique pour une extraction de qualité. L'opercule en retrait axialement vers l'intérieur du corps évite toute interférence avec le support du dispositif d'extraction avant l'ouverture de la membrane, et permet ainsi une ouverture maîtrisée de la capsule. La membrane associée à un filtre permet d'assurer une extraction de la substance dans des conditions de pression satisfaisantes avec une retenue efficace de la substance à l'intérieur de la capsule. L'opercule fourni sous la forme d'un film complexe facilite la fabrication de la capsule à faible coût.

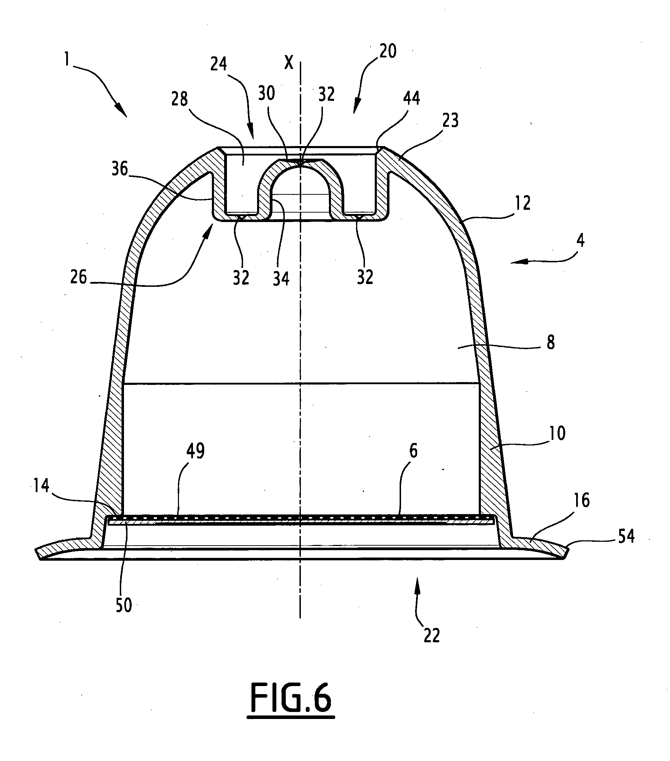

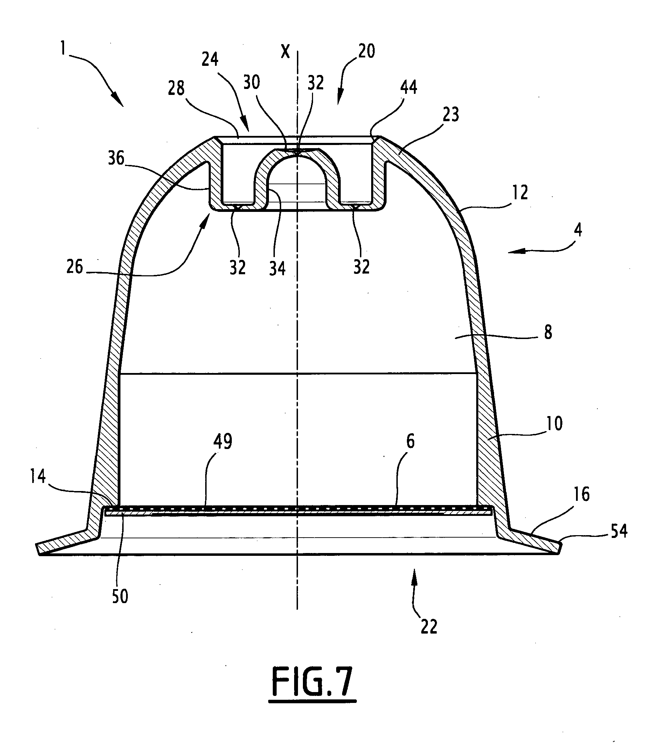

Les variantes de capsule illustrées sur les figures 6 et 7 diffèrent de celle des figures 1 à 3 en ce que la région marginale 54 du rebord annulaire 16 est inclinée vers l'avant de la capsule 1. Tel que représenté sur la Figure 6, le rebord annulaire 16 est incurvé vers l'avant de la capsule 1. Tel que représenté sur la Figure 7, le rebord annulaire 16 est tronconique s'évasant vers l'avant.

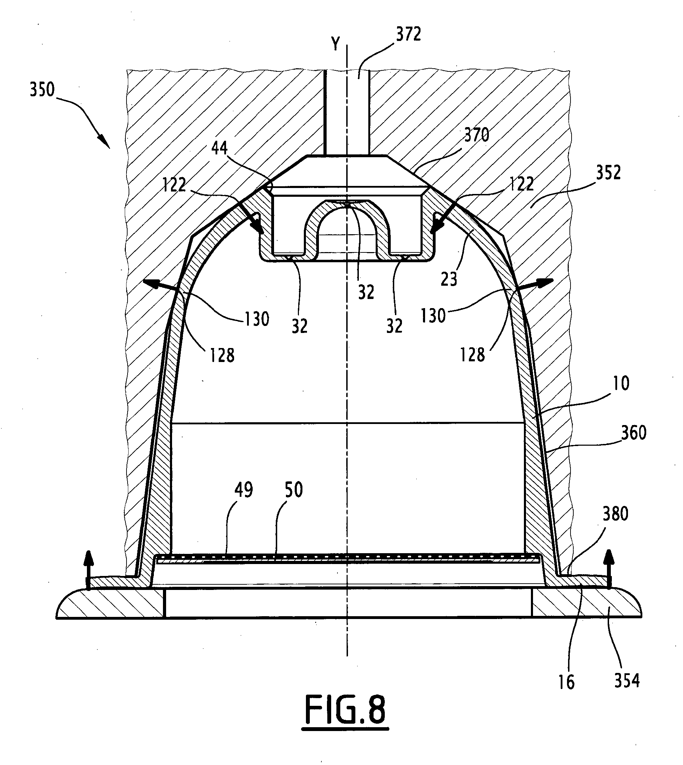

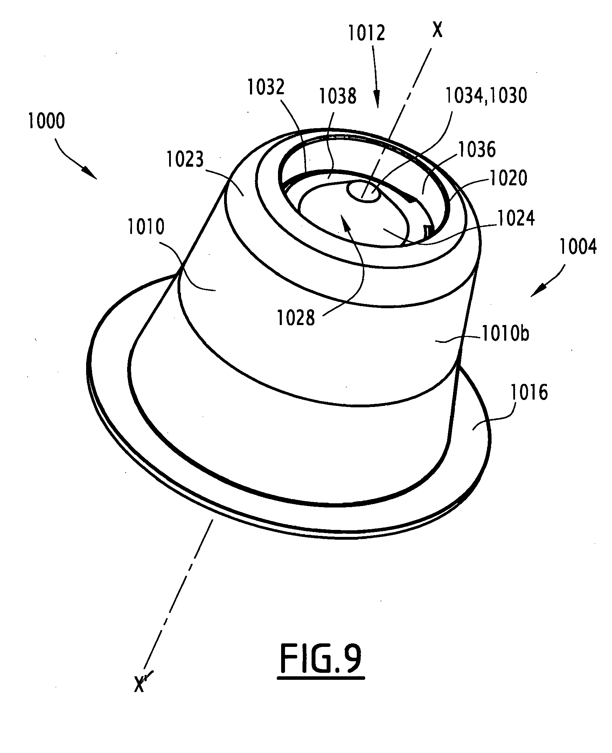

Tel qu'illustré sur les figures 8 et 9, lors de la fermeture du dispositif d'extraction 350, sous l'effet de la force d'appui exercée par le support 354, le rebord annulaire 16 se déforme en s'aplanissant.

Un tel rebord 16 permet de garantir et de renforcer le contact 122 entre le fond 12 de la capsule 1 et le fond de logement 370 à la fermeture du dispositif 350, tout en pouvant se déformer pour permettre la fermeture du dispositif d'extraction 350.

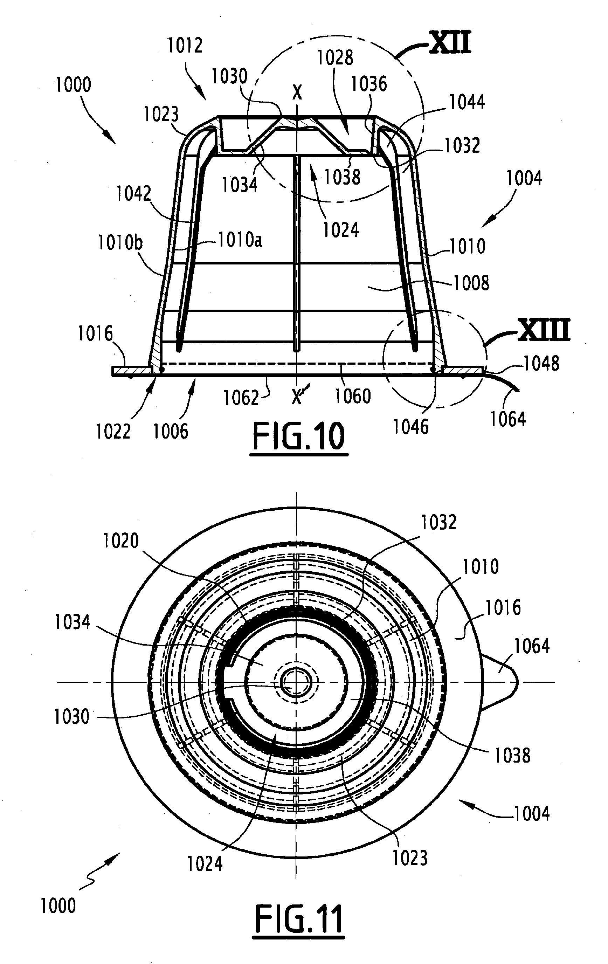

La capsule 1000 selon le deuxième mode de réalisation, représentée sur les Figures 9 à 21, comprend, comme visible sur les Figures 9 et 10, un corps 1004 creux et un opercule 1006 de sortie délimitant ensemble une chambre 1008 intérieure contenant une substance (non représentée) pour la préparation d'une boisson.

Le corps 1004 présente une forme générale de coupelle et est étanche à l'air et à l'eau. Il comprend une paroi latérale extérieure 1010, un fond 1012 fermant une extrémité arrière 1020 du corps 1004, et un rebord annulaire 1016 entourant une extrémité avant 1022 ouverte du corps 1004.

La paroi latérale extérieure 1010 et le fond 1012 sont venus de matière et sont réalisés en un premier matériau plastique étanche à l'air et à l'eau. Le premier matériau plastique est choisi pour être inerte vis-à-vis de la substance contenue dans la capsule 1000. De préférence, ledit premier matériau est translucide et n'est pas coloré dans la masse, de façon à éviter la diffusion de la coloration dans la substance. Typiquement, le deuxième matériau plastique est du polyamide. Le polyamide n'interfère pas avec les produits alimentaires et constitue une barrière à l'air et à l'eau très performante.

De préférence, le rebord annulaire 1016 est constitué d'un deuxième matériau plastique, différent du premier matériau plastique. Le deuxième matériau plastique est préférentiellement choisi pour être un matériau de faible coût. Celui-ci n'étant pas en contact avec la substance, ses propriétés vis-à-vis de la substance n'entrent pas en compte dans le choix du deuxième matériau. Typiquement, le deuxième matériau plastique est du polyuréthane, qui est un matériau peu coûteux.

De préférence, les premier et deuxième matériaux plastiques sont des matériaux compatibles, c'est-à-dire des matériaux adaptés pour polymériser l'un avec l'autre.

Ainsi, il est possible de produire des capsules 1000 à coût réduit. Ces capsules étant destinées à être produites en très grandes séries, cela permet de réaliser des économies importantes.

De préférence, le deuxième matériau est coloré dans la masse. Ainsi, il est possible de colorer différemment les rebords annulaires 1016 de capsules 1000 contenant différentes substances, de façon à distinguer aisément une capsule 1000 contenant une première substance d'une autre capsule 1000 contenant une deuxième substance, différente de la première.

La paroi latérale extérieure 1010 s'étend à partir du fond 1012 suivant un axe longitudinal X jusqu'à l'extrémité avant 1022 du corps 1004.

La paroi latérale extérieure 1010 est sensiblement tronconique de révolution autour de l'axe longitudinal X. Elle est rigide. Elle présente une surface intérieure 1010a, orientée vers la chambre 1008, et une surface extérieure 1010b, à l'opposée de la surface intérieure 1010a.

Le fond 1012 comprend une région périphérique 1023 et une région centrale 1024.

La région périphérique 1023 est rigide. Elle est arrondie et s'étend radialement vers l'intérieur et axialement vers l'arrière à partir de la paroi latérale extérieure 1010, et présente une concavité tournée vers l'intérieur du corps 1004. Elle s'étend ainsi depuis la paroi latérale extérieure 1010 jusqu'à l'extrémité arrière 1020 du corps 1004. L'extrémité arrière 1020 est typiquement une ligne fermée, par exemple un cercle.

La région centrale 1024 rentre axialement vers l'intérieur de la chambre 1008 à partir de la région périphérique. La région centrale 1024 définit ainsi dans le fond 1012 un évidement 1028 à l'extérieur du corps 1004.

La région centrale 1024 comprend une portion externe 1036 tubulaire s'étendant axialement vers l'intérieur de la chambre 1008 à partir de la région périphérique 1023, une portion de fond 1038 s'étendant radialement vers l'intérieur à partir de l'extrémité intérieure de la potion externe 1036 et fermant l'évidement 1028, et une portion interne 1034 centrale faisant saillie vers l'extérieur à partir de la portion de fond 1038.

La portion interne 1034 définit un plot central creux 1030 dans l'évidement 1028. Celui-ci présente ainsi une forme annulaire. La portion externe 1036, la portion de fond 1038 et la portion interne 1034 définissent une nervure 1026 annulaire dans la région centrale 1024.

La portion de fond 1038 comprend au moins une zone de moindre résistance 1032 prévue pour rompre sous l'effet d'un fluide sous pression. De préférence, la ou chaque zone de moindre résistance est prévue pour rompre à une pression du fluide sous pression comprise entre 1 et 3 bars.

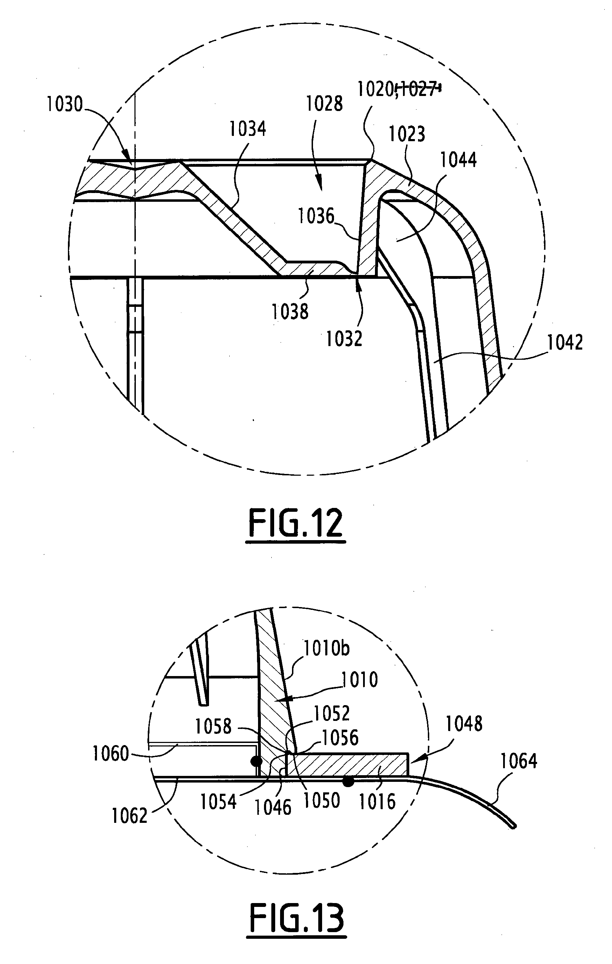

La ou chaque zone de moindre résistance 1032 est prévue par exemple sous la forme de zones de moindre épaisseur de, comme représenté sur la Figure 12. Tant que la ou chaque zone de moindre résistance 1032 n'est pas rompue, le fond 1012, et par extension l'ensemble du corps 1004, est imperméable à l'air et aux liquides.

Dans l'exemple illustré sur la Figure 11, la zone de moindre résistance est définie à la périphérie de la portion de fond 1038, à la jonction entre la portion de fond 1038 et la portion externe 1036. La zone de moindre résistance présente la forme d'un arc de cercle. L'arc de cercle s'étend de préférence sur au moins 270°.

La forme de la portion interne 1034 conditionne l'effort de cisaillement axial généré par un liquide sous pression présent dans l'évidement 1028.

Dans le mode de réalisation des figures 9 à 15, la portion interne 1034 présente une forme tronconique, s'élargissant de l'arrière vers l'avant de la capsule 1000, et saillante vers l'extérieur.

En variante, la portion interne 1034 est s'étend dans un plan radial. A une pression déterminée du fluide présent dans l'évidement 1028, une portion interne 1034 plane induit un effort de cisaillement plus élevé qu'une portion interne saillante vers l'extérieur.

Le corps 1004 comprend également des nervures longitudinales 1042 de rigidification de la paroi latérale extérieure 1010 et des nervures radiales 1044 de rigidification du fond 1012.

Chaque nervure longitudinale 1042 s'étend longitudinalement le long de la paroi latérale extérieure 1010, de préférence, comme représenté, le long de la surface intérieure 1010a. Ainsi, les nervures longitudinales sont adaptées pour favoriser l'émulsion entre le fluide sous pression et la substance contenue dans la chambre 1008. En variante, chaque nervure longitudinale 1042 s'étend le long de la surface extérieure 1010b.

Chaque nervure radiale 1044 s'étend radialement entre la portion externe 1036 et la région périphérique 1023. Les nervures radiales 1044 rigidifient le fond 12 et favorisent ainsi la génération des efforts de cisaillement induits par la pression du fluide sous pression directement sur la ou chaque zone de faiblesse 1032. Dans l'exemple représenté sur les Figures 10 à 15, chaque nervure radiale 1044 s'étend dans le prolongement d'une nervure longitudinale 1042.

Le rebord annulaire 1016 s'étend radialement vers l'extérieur, d'une bordure annulaire intérieure 1046 jusqu'à une bordure annulaire extérieure 1048, à partir de la surface extérieure 1010b de la paroi latérale extérieure 1010. Il définit l'extrémité avant 1022 du corps 1004. Il ne supporte pas d'élément d'étanchéité rapporté ou de relief d'étanchéité déformable. De préférence, il est sensiblement plan. La bordure annulaire extérieure 1048 est libre.

Comme visible sur le détail représenté sur la Figure 13, la surface extérieure 1010b de la paroi latérale extérieure 1010 définit, à proximité de l'extrémité avant 1022 du corps 1004, un dégagement annulaire définissant un épaulement 1050 et une gorge 1052 de liaison du rebord annulaire 1016 à la paroi latérale extérieure 1010.

L'épaulement 1050 est en retrait vers l'arrière par rapport à l'extrémité avant 1022. Il s'étend radialement et parallèlement à l'extrémité avant 1022, entre une extrémité intérieure 1054 et une extrémité extérieure 1056.

La gorge 1052 est formée dans l'épaulement 1050 et fait saillie longitudinalement vers l'arrière depuis l'extrémité intérieure 1054 de l'épaulement 1050.

Le rebord annulaire 1016 comprend une protubérance annulaire 1058 faisant saillie longitudinalement depuis la bordure annulaire intérieure 1046 dans la gorge 1052. La protubérance 1058 coopère avec la gorge 1052 pour renforcer la liaison du rebord annulaire 1016 à la paroi latérale extérieure 1010.

Ainsi, une partie de la paroi latérale extérieure 1010 s'étend entre le rebord annulaire 1016 et la chambre 1008, ce qui évite que la substance ne soit en contact avec le deuxième matériau.

De retour à la Figure 1, l'opercule 1006 est fixé par sa périphérie sur la paroi latérale extérieure 1010 et sur le rebord annulaire 1016. L'opercule 1006 ferme ainsi l'extrémité avant 1022 du corps 1004.

L'opercule 1006 comprend un filtre 1060 de sortie propre à laisser passer un fluide sous pression en retenant la substance contenue dans la chambre 1008. Le filtre 1060 est en papier filtre poreux, en matériau plastique tissé ou en film plastique perforé. De préférence, le filtre 1060 est, comme représenté, disposé en retrait de l'extrémité avant 1022, vers la chambre 1008, et est fixé sur sa périphérie à la surface intérieure 1010a de la paroi latérale extérieure 1010. Le filtre 1060 est par exemple disposé entre 1 et1,5 mm en retrait par rapport à l'extrémité avant 1022.

L'opercule 1006 comprend en outre une membrane 1062 étanche à l'air et à l'eau doublant le filtre 1060. De préférence, la membrane 1062 est fixée, par exemple soudée, sur le rebord annulaire 1016. La membrane 1062 s'étend le long de l'extrémité avant 1022 du corps 1004. La membrane 1062 permet de conserver la substance dans une atmosphère inerte, de façon à éviter toute oxydation de la substance.

La membrane 1062 est pelable, c'est-à-dire qu'elle peut être facilement désolidarisée du corps 1004. A cet effet, elle comprend une languette 1064 s'étendant radialement vers l'extérieur depuis le rebord annulaire 1016, pour permettre à un utilisateur de retirer aisément la membrane 1062 avant utilisation de la capsule 1000 dans un dispositif d'extraction.

En option, la membrane 1062 présente des lignes d'affaiblissement (non représentées), de sorte que la membrane 1062 est propre à se déchirer sous le seul l'effet de la pression d'un liquide. Ainsi, dans le cas où un utilisateur aurait oublié de retirer la membrane 1062 avant d'insérer la capsule 1000 dans un dispositif d'extraction, l'extraction peut être quand même exécutée normalement, sans risque d'endommagement pour le dispositif d'extraction.

Le filtre 1060 est disposé entre la chambre 1008 et la membrane 1062. L'espace entre le filtre 1060 et la membrane 1062 est de préférence rempli avec un gaz inerte, typiquement avec de l'azote.

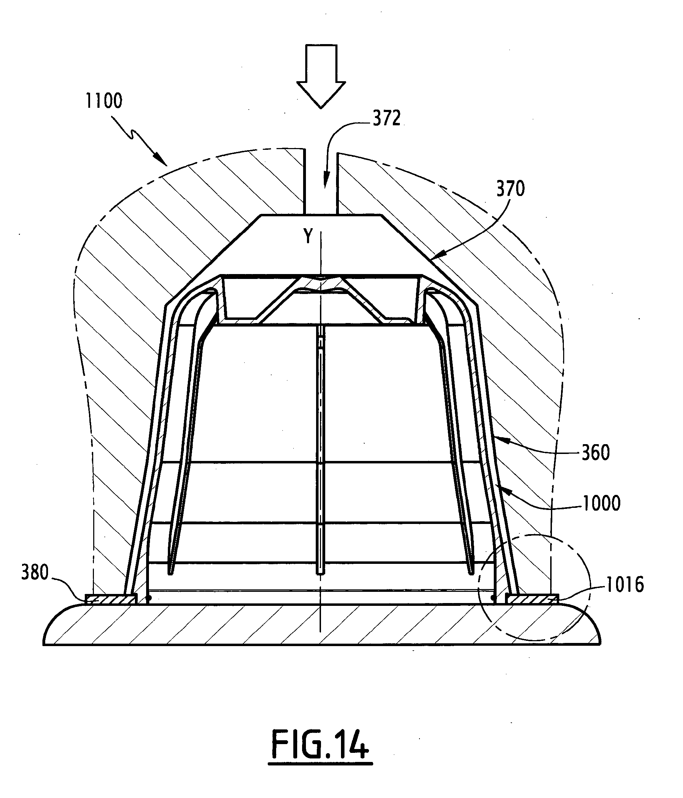

La capsule 1000 est représentée sur la Figure 14 insérée dans un dispositif 1100 d'extraction de boisson. Ce dispositif 1100 est similaire au dispositif d'extraction 350 décrit plus haut. Les éléments similaires sont désignés par les mêmes signes de référence. On notera que la capsule 1000 est adaptée pour que le bord annulaire 380 vienne en contact avec le rebord annulaire 1016 lorsque le dispositif d'extraction 1100 est en configuration fermée.

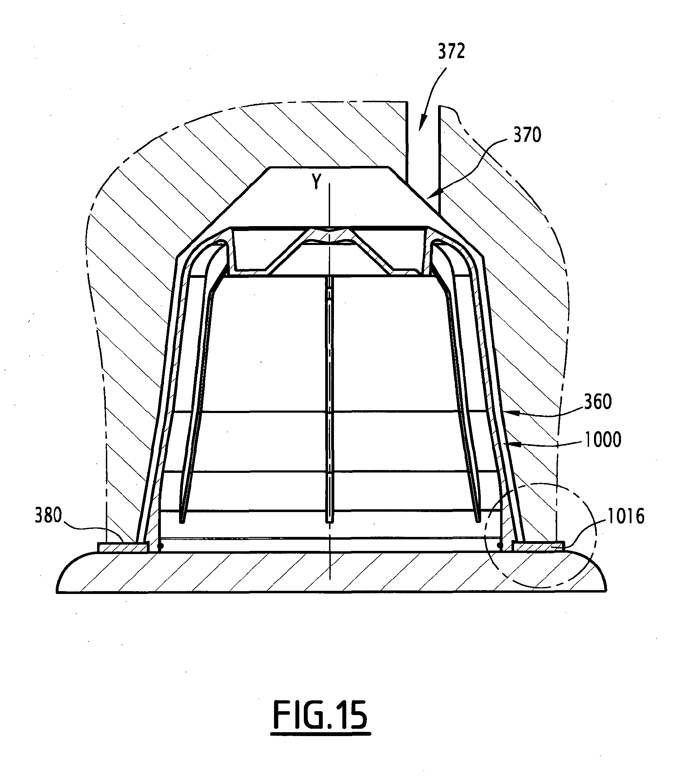

Une variante du dispositif d'extraction 1100 est représentée sur la Figure 15. Sur cette Figure, on observera que le conduit 372 d'amenée de liquide d'extraction est décalé radialement par rapport à l'axe longitudinal Y. Ainsi, la capsule 1000 est également adaptée pour être utilisée dans des dispositifs d'extraction de boisson où l'arrivée de liquide sous pression dans le logement de réception 353 ne se fait pas au centre du logement 353.

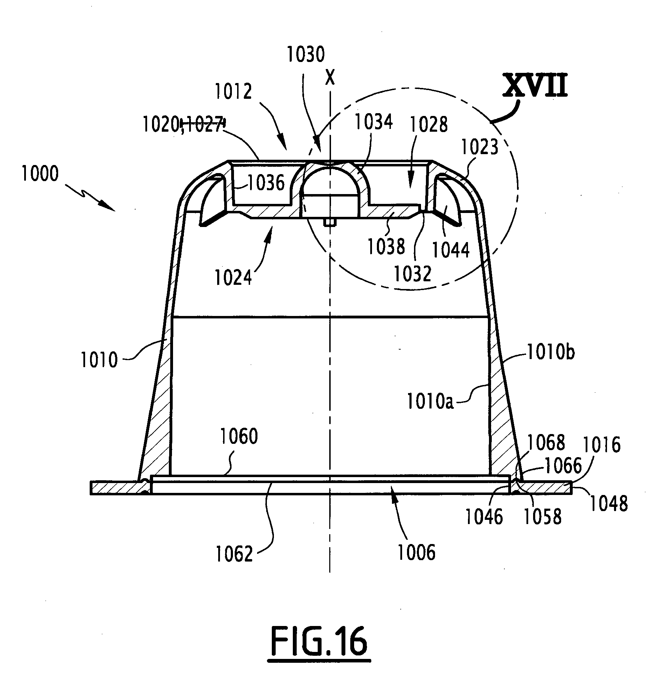

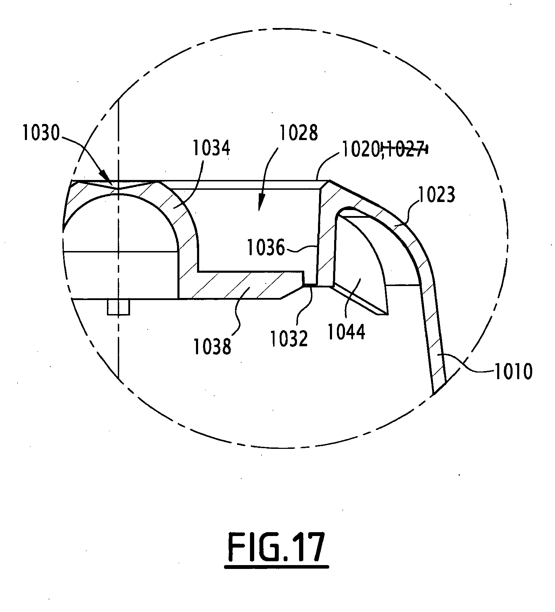

Une variante de la capsule 1000 est présentée sur les Figures 16 et 17.

Dans cette variante, la portion interne 1034 a une forme hémisphérique à concavité orientée vers l'intérieur du corps 1004. Cette forme est adaptée pour permettre la rupture de la zone de faiblesse 1032 à des pressions supérieures au cas où la portion interne 1034 présente une forme tronconique.

Le rebord annulaire 1016 n'est pas lié à la surface extérieure 1010b de la paroi latérale extérieure 1010, mais à une face annulaire avant 1066 de la paroi latérale extérieure 1010. Ladite face annulaire avant 1066 définit une gorge 1068 faisant saillie longitudinalement vers l'arrière et avec laquelle coopère la protubérance 1058 du rebord annulaire 1016 pour renforcer la liaison du rebord annulaire 1016 avec la paroi latérale extérieure 1010.

La surface intérieure 1010a de la paroi latérale extérieure 1010 définit un épaulement intérieur annulaire s'étendant dans un plan radial et étant orienté vers l'avant. L'épaulement interne est en retrait axialement vers l'intérieur du corps 1004 par rapport à l'extrémité avant 1022 du corps 1004 et au rebord annulaire 1016. Cet épaulement intérieur est adapté pour supporter l'opercule 1006.

L'épaulement intérieur étant en retrait par rapport à la face annulaire avant 1066, la substance n'est ainsi pas en contact avec le deuxième matériau formant le rebord annulaire 1016.

De même que dans le premier mode de réalisation, l'opercule 1006 est constitué par un film complexe bicouche comprenant le filtre 1060 et la membrane 1062. Ce film complexe est fixé par sa périphérie sur l'épaulement interne de sorte que l'opercule 1006 est disposé en retrait axialement vers l'intérieur du corps 1004 par rapport à l'extrémité avant 1022 du corps 1004. De préférence, la distance de retrait de l'opercule 1006 par rapport à l'extrémité avant 1022 du corps 1004 est supérieure à 1 mm.

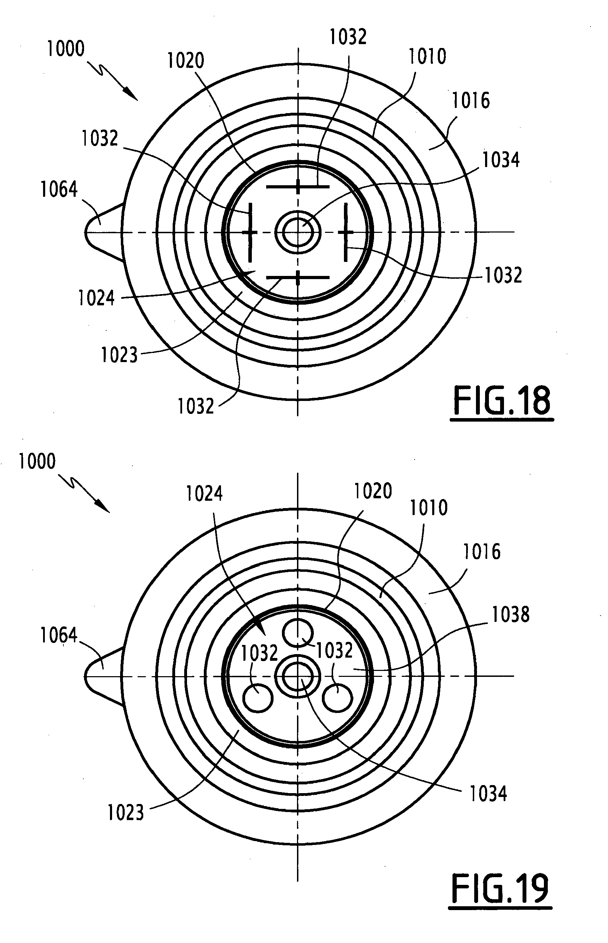

D'autres variantes de la capsule 1000 sont présentées sur les Figures 18 à 22.

Dans la variante représentée sur la Figure 18, la portion de fond 1038 comprend une pluralité de zones de moindre résistance 1032, chacune étant formée par deux lignes de faiblesse s'entrecoupant de façon à former une croix. Dans l'exemple représenté, les zones de moindre résistance 1032 sont au nombre de quatre. En variante, le nombre de zones de moindre résistance 1032 est différent.

Dans la variante représentée sur la Figure 18, la portion de fond 1038 comprend une pluralité de zones de moindre résistance 1032, chacune étant formée par une ligne de faiblesse circulaire fermée, chacune délimitant un disque n'incluant pas la portion interne 1034. Dans l'exemple représenté, les zones de moindre résistance 1032 sont au nombre de trois. En variante, le nombre de zones de moindre résistance 1032 est différent.

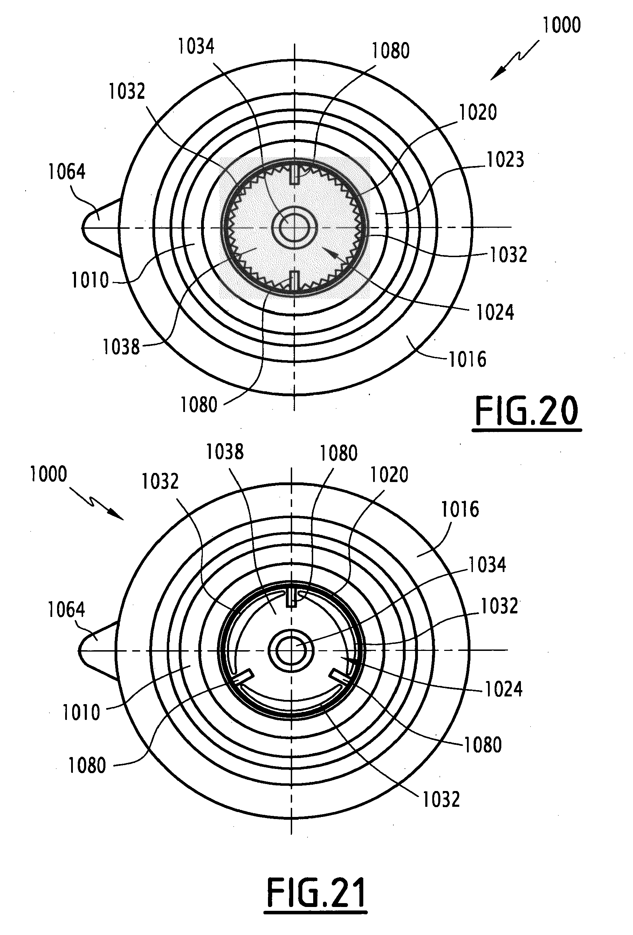

Dans la variante représentée sur la Figure 20, la portion de fond 1038 comprend deux zones de moindre résistance 1032, chacune présentant la forme d'un demi-cercle dentelé et s'étendant à la périphérie de la portion de fond 1038, le long de la jonction avec la portion externe 1036.

Le fond 12 comprend en outre deux nervures 1080 de renforcement de la région centrale 1024. Chaque nervure 1080 s'étend longitudinalement entre la portion tubulaire 1026 et la bordure périphérique 1030. Chaque nervure 1080 est interposée entre les deux zones de moindre résistance 1034. Dans l'exemple représenté, les nervures 1080 sont ainsi diamétralement opposées l'une à l'autre.

Ces nervures 1080 sont destinées à concentrer les efforts de cisaillement dus à la force exercée par le fluide sous pression sur le fond 1012 dans le dispositif d'extraction 1100 sur les zones de moindre résistance 1034.

Dans la variante représentée sur la Figure 21, la portion de fond 1038 comprend trois zones de moindre résistance 1032, chacune étant constituée par une ligne fermée délimitant un croissant dont le grand côté s'étend le long de la portion externe 1036.

Le fond 1012 comprend également des nervures 1080 de renforcement de la région centrale 1024. Ces nervures 1080 sont ici au nombre de trois et chacune est intercalée entre deux zones de moindre résistance 1032.

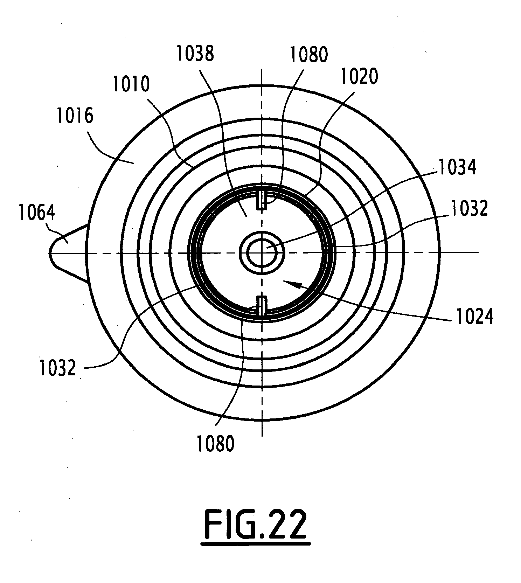

Enfin, dans la variante présentée sur la Figure 22, la portion de fond 1038 comprend une unique zone de moindre résistance 1032 constituée par une ligne circulaire fermée s'étendant le long de la portion externe 1036.

Le procédé de fabrication de la capsule 1000 va être brièvement décrit, en regard de la Figure 10.

Dans un premier temps, le premier matériau plastique est coulé, par exemple injecté, dans un moule, pour former le fond 1012 et la paroi latérale extérieure 1010. Puis, dans un deuxième temps, le deuxième matériau plastique est à son tour coulé dans le moule, de façon à former le rebord annulaire 1016.

Les premier et deuxième matériaux plastiques étant des matériaux compatibles, ils se lient chimiquement. En particulier, une partie des molécules du premier matériau diffuse dans le deuxième matériau et vice-versa. Ainsi, il se forme une fine couche dans laquelle les deux matériaux sont mélangés et les deux matériaux sont ainsi intimement liés l'un avec l'autre.

Grâce à la capsule décrite ci-dessus, la partie du corps de la capsule en contact avec la substance est formée dans un matériau inerte vis-à-vis de la substance, ce qui permet de conserver la substance dans des conditions optimales, sans risques de dégradation de la substance par oxydation ou par des éléments toxiques contenus dans le matériau en contact avec la substance.

En outre, le fait que le premier matériau plastique ne soit pas coloré dans la masse permet de réduire la probabilité de migration d'éléments toxiques de la capsule vers la substance.

Enfin, le fait d'utiliser un deuxième matériau pour le rebord annulaire permet de réduire le coût de fabrication de la capsule et permet en outre, par coloration du deuxième matériau, d'identifier aisément la substance contenue dans la chambre de la capsule, sans risque de migration des pigments dans la substance, celle-ci n'étant pas en contact avec le deuxième matériau.

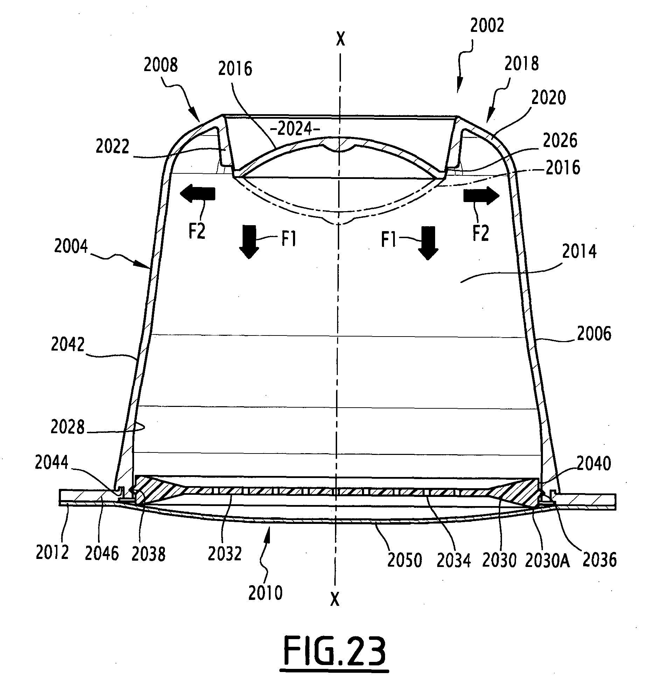

La capsule 2002 illustrée sur la Figure 23 est propre à permettre l'extraction d'une boisson sous pression. La capsule 2002 est propre à contenir une substance alimentaire à extraire sous pression.

La capsule 2002 comprend une paroi latérale 2006 s'étendant suivant un axe longitudinal X-X, une paroi d'entrée 2008 fermant une première extrémité arrière de la paroi latérale 2006, et une paroi de sortie 2010 fermant une deuxième extrémité avant de la paroi latérale 2006.

La capsule 2002 comprend un rebord 2012 annulaire entourant l'extrémité avant de la paroi latérale 2006 et s'étendant radialement vers l'extérieur à partir de la paroi latérale 2006.

La paroi latérale 2006, la paroi d'entrée 2008 et la paroi de sortie 2010 délimitent ensemble une chambre 2014 de réception d'une substance alimentaire pour l'extraction d'une boisson, par exemple du café. La substance présente dans la capsule 2002 n'est pas représentée sur les dessins pour des raisons de clarté.

La paroi d'entrée 2008 est propre à permettre l'entrée d'un liquide d'extraction sous pression, de préférence de l'eau, et la paroi de sortie 2010 est propre à permettre la sortie du liquide d'extraction après passage au travers de la substance contenue dans la capsule 2002.

La paroi latérale 2006 et la paroi d'entrée 2008 sont venues de matière. Elles définissent un corps 2004 réalisé d'un seul tenant en forme de coupelle. La paroi latérale 2006 et la paroi d'entrée 2008 sont par exemple moulées par injection de matière plastique.

La paroi latérale 2006 est sensiblement tronconique de révolution autour de l'axe longitudinal X-X. La paroi latérale 2006 s'évase de son extrémité arrière vers son extrémité avant. La paroi latérale 2006 est rigide.

La paroi d'entrée 2008 est étanche à l'air et à l'eau et est prévue pour se rompre sous l'effet d'un fluide sous pression à l'extérieur de la capsule 2002.

La paroi d'entrée 2008 comprend un dôme 2016 central en forme de calotte sphérique. Le dôme 2016 est à concavité orientée vers l'intérieur de la capsule 2002. Le dôme s'étend transversalement à l'axe X-X. Le dôme 2016 est déformable vers l'intérieur de la capsule 2002 sous l'effet du fluide sous pression à l'extérieur de la capsule 2002.

La paroi d'entrée 2008 comprend une région périphérique 2018 annulaire entourant le dôme 2016. Le dôme 2016 est disposé en retrait vers l'intérieur de la capsule 2002 par rapport à l'extrémité arrière de la capsule 2002. La région périphérique 2018 comprend une portion périphérique 2020 annulaire et une portion axiale 2022. La portion périphérique 2020 entoure la portion axiale 2022. La portion axiale 2022 est tubulaire et s'étend axialement suivant l'axe X-X en rentrant vers l'intérieur de la capsule 2002 à partir d'un bord interne de la portion périphérique 2020. La portion axiale 2022 est tronconique convergeant vers l'intérieur de la capsule 2002. Le dôme 2016 est fixé à l'extrémité axiale de la portion axiale 2022 située vers l'intérieur de la capsule 2002, adjacent à la paroi de sortie 2010.

La portion axiale 2022 et le dôme 2016 délimitent dans la paroi d'entrée 2008 un évidement 2024 extérieur ouvert vers l'arrière et dont le fond est formé par le dôme 2016 et la surface latérale par la portion axiale 2022.

La paroi d'entrée 2008 comprend une zone de moindre résistance 2026 à la périphérie du dôme 2016. La zone de moindre résistance 2026 relie la périphérie du dôme 2016 à la région périphérique 2018, plus précisément à la portion tubulaire 2020.

La zone de moindre résistance 2026 est tubulaire et s'étend axialement suivant l'axe X-X. La zone de moindre résistance 2026 se présente sous la forme d'une bande dont l'épaisseur, prise radialement à l'axe X-X, est inférieure à celle de la portion axiale 2022. L'épaisseur de la zone de moindre résistance 2026 est également inférieure à l'épaisseur du dôme 2016. La zone de moindre résistance 2026 prolonge axialement la portion axiale 2022 et se raccorde à la périphérie du dôme 2016.

Lorsqu'un fluide sous pression est amené sur la paroi d'entrée 2008, le fluide exerce un effort axial sur le dôme 2016. Le dôme 2016 résiste en transmet l'effort axial à la zone de moindre résistance 2026 qui est sollicitée en tension axialement comme illustré par les flèches F1 sur la Figure 23. Le dôme 2016 tend à s'écraser axialement en se dilatant radialement à sa périphérie. Le dôme 2016 en s'écrasant sollicite la zone de moindre résistance 2026 radialement vers l'extérieur comme illustré par les flèches F2 sur la Figure 23. La zone de moindre résistance 2026 est sollicitée axialement dans sa direction d'extension et en cisaillement dans sa direction de moindre épaisseur. Il en résulte que la zone de moindre résistance 2026 rompt facilement sous une pression contrôlée.

Dans un mode de réalisation, le dôme 2016 est à action brusque et peut se retourner sous l'effet de la pression d'un fluide sur la paroi d'entrée 2008. Le dôme 2016 se retourne brusquement de façon que sa concavité s'inverse sous l'effet du fluide sous pression comme illustré en pointillés sur la Figure 23. Lorsqu'un fluide sous pression est amené sur la paroi d'entrée 2008, le fluide exerce un effort sur le dôme 2016. Le dôme 2016 résiste jusqu'à une pression déterminée du fluide et peut se retourner brusquement de sorte que sa concavité s'inverse. En cas de retournement, le dôme 2016 et la zone de moindre résistance 2026 subissent des déformations importantes qui provoquent des ruptures dans le dôme 16 et/ou ou dans la zone de moindre résistance 2026. Les ruptures provoquées sont suffisantes pour laisser entrer l'eau de préparation de la boisson dans la capsule. La pression de retournement du dôme 2016 peut être calibrée facilement ce qui permet de contrôler avec précision la pression d'entrée de l'eau et par conséquent la qualité d'extraction de la substance contenue dans la capsule 2002.

La portion tubulaire 2020 rentrante rigidifie la région périphérique 2018 de la paroi d'entrée 2008 ce qui permet de concentrer les déformations dans le dôme 2016 et la zone de moindre résistance 2026.

La paroi de sortie 2010 est rapportée sur la paroi latérale 2006. La paroi de sortie 2010 et la surface interne 2028 de la paroi latérale 2006 comprennent des reliefs complémentaires d'encliquetage permettant d'encliqueter la paroi de sortie 2010 dans l'extrémité avant de la paroi latérale 2008.

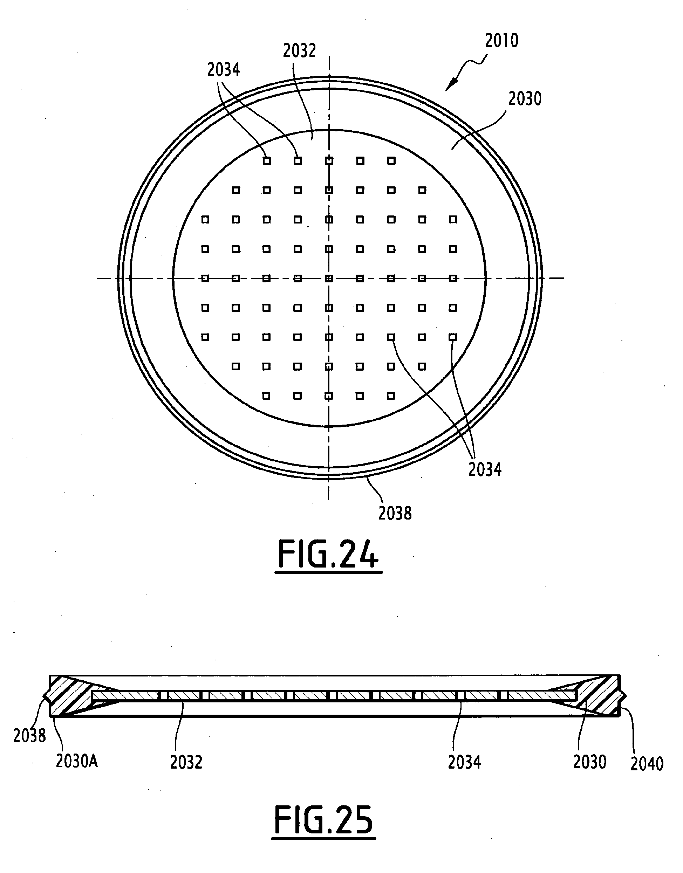

Comme illustré sur les Figures 23 et 24, la paroi de sortie 10 est de forme discoïdale. La paroi de sortie 2010 comprend un cadre 2030 périphérique et un filtre 2032 s'étendant en travers du cadre 2030 et comprenant des orifices 2034 pour le passage de l'eau.

Les reliefs d'encliquetage comprennent une nervure de fixation 2036 annulaire et une gorge de fixation 2038 annulaire complémentaires, prévue l'une sur le paroi latérale 2006 et l'autre sur le cadre 2030. La nervure de fixation 2036 est prévue pour s'encliqueter dans la gorge de fixation 2038. La nervure de fixation 2036 est ménagée sur la tranche 2040 du cadre 2030 et la gorge de fixation 2038 est ménagée dans la surface interne 2028 de la paroi latérale 2006.

Le cadre 2030 est autoportant de façon à conserver sa forme et assurer l'encliquetage de la paroi de sortie 2010 dans la paroi latérale 2006. Le cadre 2030 fait saillie vers l'avant par rapport à l'extrémité avant du corps 2004 et notamment par rapport au rebord 2012. Ainsi, le cadre 2030 peut venir en appui contre un support d'un dispositif d'extraction.

Le cadre 2030 est plus épais que le filtre 2032. Le filtre 2032 est ainsi disposé en retrait vers l'intérieur de la capsule 2002 par rapport à la face externe 2030A avant du cadre 2030 tournée vers l'extérieur de la capsule la paroi latérale 2006. Ceci évite que le filtre 2032 se déchire contre des reliefs d'un support d'un dispositif d'extraction propre à recevoir la capsule 2002.

Les orifices 2034 sont suffisamment petits pour retenir la substance, suffisamment nombreux pour laisser passer la boisson préparée, et de préférence répartis sur la surface du filtre 2032 pour assurer une extraction correcte de la substance.

Comme représenté sur la Figure 23, le cadre 2030 et le filtre 2032 sont venus de matière. Ils sont par exemple réalisés en matière plastique moulée par injection.

Dans une variante illustrée sur la Figure 25, le cadre 2030 est rapporté sur le filtre 2032. Le cadre 2030 est par exemple surmoulé sur le filtre 2032, de préférence sur la région marginale du filtre 2032. La région marginale du filtre 2032 est noyée dans l'épaisseur du cadre 2030.

Le filtre 2032 est formé par exemple d'un filtre, d'un film percé ou d'un tissu. Le filtre 2032 est réalisé en matière plastique, en fibres naturelles, synthétiques ou métallique ouen métal. Le filtre 2032 est par exemple un film en aluminium percé.

Le cadre 2030 est par exemple en matière plastique injectée sous pression. Une matière plastique formant le cadre 2030 est par exemple différente d'une matière plastique formant le filtre 2032. Le cadre 2030 est réalisé dans une matière plastique permettant l'obtention d'un cadre rigide autoportant.

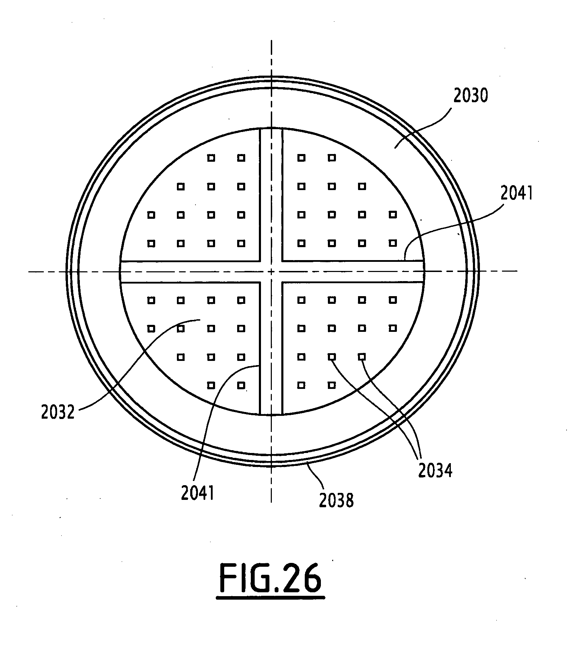

Dans une variante illustrée sur la Figure 26, la paroi de sortie 2010 comprend des traverses de renfort 2041 s'étendant transversalement en travers du cadre 2030. Les traverses de renfort 2041 sont venues de matière avec le cadre 2030. Des traverses de renfort 2041 sont prévues sur la face externe du filtre 2032 tournée vers l'extérieur de la capsule 2002 et/ou la face interne du filtre 2032 tournée vers l'intérieur de la capsule 2002.

Comme représentées sur la Figure 26, les traverses de renfort 2041 forment une croix. En variante, les traverses de renfort sont agencées différemment.

La paroi de sortie 2010 peut être obtenue facilement et à faible coût. Ses orifices 2034 calibrés permettent de contrôler la pression de sortie de la boisson. La capsule 2002 est fabriquée facilement en remplissant le corps 2004 avec la substance puis en fixant la paroi de sortie 2010 mécaniquement sur le corps 2004 par simple clipsage de la paroi de sortie 2010 dans la paroi latérale 2006. Cette opération de fixation est simple, fiable et facilement industrialisable à grande échelle. Le clipsage permet de compacter la substance.

Le rebord 2012 est rapporté sur la paroi latérale 2006. Le rebord 2012 entoure l'extrémité avant ouverte de la paroi latérale 2006 du corps 2004. Le rebord 2012 s'étend radialement vers l'extérieur à partir de la surface externe 2042 de la paroi latérale 2006. Il ne supporte pas d'élément d'étanchéité rapporté ou de relief d'étanchéité déformable.

Comme visible sur la Figure 23, la surface externe 2042 de la paroi latérale 2006 définit, à proximité de l'extrémité avant, un dégagement annulaire 2044 dans lequel la bordure interne 2046 du rebord 2012 est engagée. Le rebord 2012 est fixé sur la paroi latérale 2006 sans s'étendre dans la chambre 2018 et sans être en contact avec la substance contenue dans la capsule 2002.

De préférence, le rebord 2012 est surmoulé sur l'extrémité avant de la paroi latérale 2006.

De préférence, le paroi latérale 2006 et la paroi d'entrée 2008 sont réalisées en un premier matériau plastique étanche à l'air et à l'eau. Le premier matériau plastique est choisi pour être inerte vis-à-vis de la substance contenue dans la capsule 2002. Le premier matériau peut être translucide ou coloré dans la masse. De préférence, le premier matériau plastique est un plastique ou un alliage de plastiques qui n'interfère pas avec les produits alimentaires et constitue une barrière à l'air et à l'eau performante.

De préférence, le rebord 2012 est constitué d'un deuxième matériau plastique, différent du premier matériau plastique. Le deuxième matériau plastique est préférentiellement choisi pour être un matériau de faible coût. Le deuxième matériau plastique est par exemple un élastomère thermoplastique (TPE) ou du polyuréthane (PU) qui sont des matériaux peu couteux.

De préférence, les premier et deuxième matériaux plastiques sont des matériaux compatibles, c'est-à-dire des matériaux adaptés pour polymériser l'un avec l'autre. Ainsi, il est possible de produire des capsules 2002 à coût réduit. Ces capsules étant destinées à être produites en très grandes séries, cela permet de réaliser des économies importantes.

Le deuxième matériau peut être coloré dans la masse. Ainsi, il est possible de colorer différemment les rebords 2010 de capsules 2002 contenant différentes substances, de façon à distinguer aisément une capsule 2002 contenant une première substance d'une autre capsule 2002 contenant une deuxième substance, différente de la première.

La capsule 2002 comprend une membrane 2050 d'étanchéité recouvrant la paroi de sortie 2010 pour fermer de manière étanche la capsule 2002 à l'extrémité avant de la paroi latérale 2006. La membrane 2050 est fixée sur le rebord 2012 sans être fixée sur la paroi de sortie 2010.

La membrane 2050 est pelable de façon à pouvoir être retirée avant usage par un utilisateur. En variante, la membrane 2050 est prévue pour se déchirer sous l'effet d'un fluide sous pression. Dans ce cas, elle comprend par exemple des lignes de faiblesse.

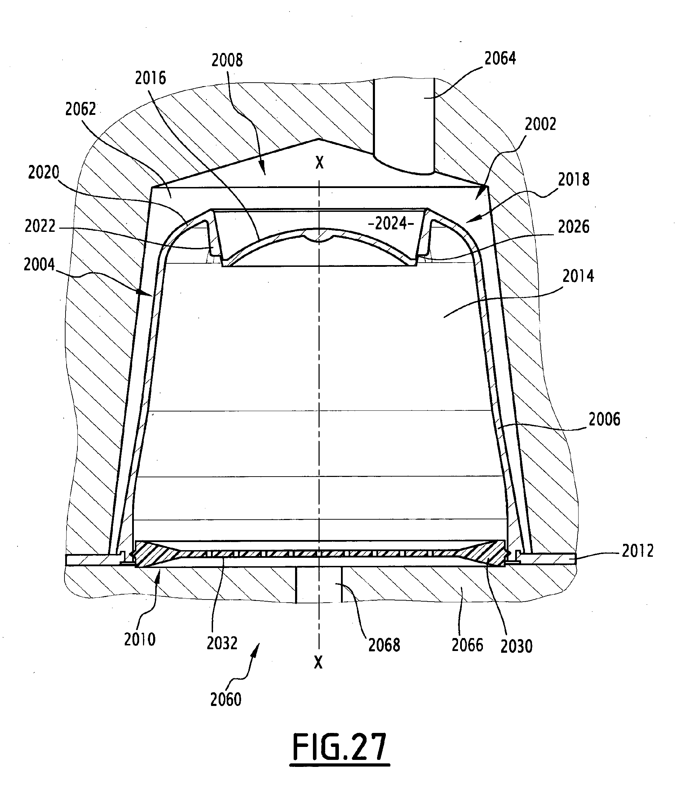

La capsule 2002 est représentée sur la Figure 27 insérée dans un dispositif 2060 d'extraction de boisson. Ce dispositif 2060 d'extraction comprend un logement 2062 de réception de la capsule 2002 et un conduit 2064 d'amenée d'eau sous pression débouchant à l'intérieur du logement 2062. Le logement 2062 présente une forme complémentaire de celle de la capsule 2002. Le conduit 2064 débouche dans la capsule 2002 à proximité de la paroi d'entrée 2008. Le logement 2062 présente un support 2066 contre lequel l'extrémité avant de la capsule 2002 est en appui. Le support 2066 comprend au moins un orifice 2068 d'évacuation de la boisson.

En fonctionnement, la membrane 2050 est retirée et la capsule 2002 est insérée dans le logement 2062. De l'eau est amenée sous pression dans le logement 2062. L'eau sous pression exerce une pression sur le dôme 2016. Le dôme 2016 sollicite en retour la zone de moindre résistance 2026 axialement en traction et radialement en cisaillement. La zone de moindre résistance 2026 rompt sous l'effet de la pression de l'eau. L'eau traverse la substance contenue dans la capsule, puis ressort par la paroi de sortie 2010 au travers du filtre 2032.

Dans le cas d'un dôme à action brusque, le dôme 2016 peut se retourner lorsque la pression de retournement du dôme 2016 est atteinte et la paroi d'entrée 2008 se rompt.

Le cadre 2030 de la paroi de sortie 2010 est en appui sur le support 2066 est n'est pas délogé de la paroi latérale 2006 sous l'effet de la pression de l'eau. Le filtre 2032 est en retrait vers l'intérieur de la capsule 2002 par rapport au cadre 2030 et ne se déchire par sur le support 2066. Il en résulte que les conditions de sortie de la boisson qui dépendent notamment du nombre d'orifices 2034 et de leur section, sont maîtrisées.

L'invention s'applique aux capsules pour l'extraction de café sous pression et à des capsules pour l'extraction d'autres boissons sous pression, telle que le thé, le chocolat, etc.... Ainsi, l'invention concerne de manière générale une capsule pour l'extraction d'une boisson sous pression.

On notera que la description donnée ci-dessus n'est nullement restrictive, et les caractéristiques des différentes variantes et des différents modes de réalisation peuvent être combinées les unes avec les autres sans sortir du cadre des revendications.

## Revendications

1. Capsule (2002) pour l'extraction d'une boisson sous pression, du type comprenant une paroi latérale (2006) s'étendant suivant un axe (X-X), une paroi d'entrée (8) fermant une première extrémité de la paroi latérale (2006) et une paroi de sortie (2010) fermant une deuxième extrémité de la paroi latérale (2006), délimitant une chambre (2014) de réception d'une substance pour la préparation d'une boisson, la paroi d'entrée (2008) étant prévue pour se rompre sous l'effet d'un fluide sous pression et comprenant une portion de fond (2016) et une zone de moindre résistance (2026) prévue pour se rompre sous l'effet d'un fluide sous pression à la périphérie de la portion de fond (2016), **caractérisée en ce que** la paroi d'entrée (2008) comprend une portion axiale (2022) s'étendant suivant l'axe (X-X) en rentrant vers l'intérieur de la capsule (2002) et la portion de fond (2016) est reliée à une extrémité axiale de la portion axiale (2022) située vers l'intérieur de la capsule (2002) par la zone de moindre résistance (2026).

2. Capsule selon la revendication 1, dans laquelle la zone de moindre résistance (2026) s'étend axialement.

3. Capsule selon la revendication 1 ou 2, dans laquelle la portion de fond (2016) est disposé axialement en retrait vers l'intérieur de la capsule (2002) par rapport à une portion périphérique (2020) de la paroi d'entrée (2008).

4. Capsule selon l'une quelconque des revendications précédentes, dans laquelle la zone de moindre résistance (2026) prolonge axialement la portion axiale (2022).

5. Capsule selon l'une quelconque des revendications précédentes, dans laquelle la zone de moindre résistance (2026) possède une épaisseur inférieure à celle de la portion axiale (2022).

6. Capsule selon l'une quelconque des revendications précédentes, dans laquelle la portion de fond est un dôme (2016).

7. Capsule selon la revendication 6, dans laquelle le dôme (2016) est à concavité tournée vers l'intérieur de la capsule (2002).

8. Capsule selon la revendication 6 ou 7, dans laquelle le dôme (2016) est à action brusque et prévu pour se retourner brusquement sous l'effet d'un fluide sous pression.

9. Capsule selon l'une quelconque des revendications précédentes, dans laquelle la paroi de sortie (2010) et la paroi latérale (2006) comprennent des reliefs complémentaires d'encliquetage.

10. Capsule selon la revendication 9, dans laquelle la paroi de sortie (2010) comprend une nervure de fixation (2036) prévue sur une tranche de la paroi de sortie (2010) et la surface interne (2028) de la paroi latérale comprend une gorge de fixation (2038) complémentaire.

11. Capsule selon l'une quelconque des revendications précédentes, dans laquelle la paroi de sortie (2010) comprend un cadre (2030) périphérique de fixation et un filtre (2032) s'étendant en travers du cadre (2030).

12. Capsule selon la revendication la revendication 11, dans laquelle le filtre (2032) comprend des orifices (2034).

13. Capsule selon la revendication 11 ou 12, dans laquelle le cadre (2030) et le filtre (32) sont venus de matière ou le cadre (2030) est rapporté sur le filtre (2032).

14. Capsule selon l'une quelconque des revendications précédentes, comprenant une membrane d'étanchéité (2050) recouvrant la paroi de sortie (2010).

15. Capsule selon l'une quelconque des revendications précédentes, comprenant un rebord (12) annulaire entourant la deuxième extrémité de la paroi latérale (2006) et s'étendant radialement vers l'extérieur à partir de la deuxième extrémité de la paroi latérale (2006), la paroi latérale (2006) et la paroi d'entrée (2008) étant venues de matière et réalisée dans une première matière, et le rebord (2012) étant formé d'une deuxième matière plastique, différente de la première matière plastique.

16. Capsule selon l'une quelconque des revendications précédentes, dans laquelle la paroi latérale (2006) et la paroi d'entrée (2008) sont venues de matière et définissent un corps (2004) réalisé d'un seul tenant en forme de coupelle.

17. Système comprenant une capsule (2002) selon l'une quelconque des revendications précédentes et un dispositif d'extraction (2060) comportant un logement (2062) destiné à recevoir la capsule (2002) et un conduit (2064) d'amenée de liquide d'extraction sous pression dans le logement (2062).

## Patentansprüche

1. Kapsel (2002) für die Druckextraktion eines Getränks der Bauart, die eine sich gemäß einer Achse (X-X) erstreckende Seitenwand (2006), eine ein erstes Ende der Seitenwand (2006) verschließende Eingangswand (8) und eine ein zweites Ende der Seitenwand (2006) verschließende Ausgangswand (2010) umfasst, die eine Empfangskammer (2014) einer Substanz für die Zubereitung eines Getränks begrenzen, wobei die Eingangswand (2008) vorgesehen ist, unter der Wirkung eines Fluids unter Druck zu bersten und einen Bodenabschnitt (2016) und eine Zone geringerer Widerstandsfähigkeit (2026) umfasst, die vorgesehen ist, unter der Wirkung eines Fluids unter Druck am Umfang des Bodenabschnitts (2016) zu bersten, **dadurch gekennzeichnet, dass** die Eingangswand (2008) einen axialen Abschnitt (2022) umfasst, der sich gemäß der Achse (X-X) erstreckt, indem er in das Innere der Kapsel (2002) eindringt, und der Bodenabschnitt (2016) mit einem axialen Ende des axialen Abschnitts (2022), das sich in Richtung des Inneren der Kapsel (2002) befindet, mit der Zone geringerer Widerstandsfähigkeit (2026) verbunden ist.

2. Kapsel nach Anspruch 1, wobei sich die Zone geringerer Widerstandsfähigkeit (2026) axial erstreckt.

3. Kapsel nach Anspruch 1 oder 2, wobei der Bodenabschnitt (2016) im Verhältnis zu einem peripheren Abschnitt (2020) der Eingangswand (2008) in das Innere der Kapsel (2002) axial zurückgezogen angeordnet ist.

4. Kapsel nach einem der vorangehenden Ansprüche, wobei die Zone geringerer Widerstandsfähigkeit (2026) den axialen Abschnitt (2022) axial verlängert.

5. Kapsel nach einem der vorangehenden Ansprüche, wobei die Zone geringerer Widerstandsfähigkeit (2026) eine geringere Dicke als der axiale Abschnitt (2022) besitzt.

6. Kapsel nach einem der vorangehenden Ansprüche, wobei der Bodenabschnitt eine Kuppel (2016) ist.

7. Kapsel nach Anspruch 6, wobei die Konkavität der Kuppel (2016) in das Innere der Kapsel (2002) zeigt.

8. Kapsel nach Anspruch 6 oder 7, wobei die Kuppel (2016) plötzlich agiert und vorgesehen ist, sich plötzlich unter der Wirkung eines Fluids unter Druck umzudrehen.

9. Kapsel nach einem der vorangehenden Ansprüche, wobei die Ausgangswand (2010) und die Seitenwand (2006) komplementäre Rastreliefs umfassen.

10. Kapsel nach Anspruch 9, wobei die Ausgangswand (2010) eine auf einem Rand der Ausgangswand (2010) vorgesehene Befestigungsrippe (2036) umfasst und die Innenfläche (2028) der Seitenwand eine komplementäre Befestigungsnut (2038) umfasst.

11. Kapsel nach einem der vorangehenden Ansprüche, wobei die Ausgangswand (2010) einen peripheren Befestigungsrahmen (2030) und einen quer zum Rahmen (2030) erstreckenden Filter (2032) umfasst.

12. Kapsel nach Anspruch 11, wobei der Filter (2032) Öffnungen (2034) umfasst.

13. Kapsel nach Anspruch 11 oder 12, wobei der Rahmen (2030) und der Filter (32) materialeinheitlich sind oder der Rahmen (2030) am Filter (2032) angebracht ist.

14. Kapsel nach einem der vorangehenden Ansprüche, die eine Dichtungsmembran (2050) umfasst, die die Ausgangswand (2010) bedeckt.

15. Kapsel nach einem der vorangehenden Ansprüche, die eine ringförmige Einfassung (12) umfasst, die das zweite Ende der Seitenwand (2006) umgibt und sich ab dem zweiten Ende der Seitenwand (2006) radial nach außen erstreckt, wobei die Seitenwand (2006) und die Eingangswand (2008) materialeinheitlich und aus einem ersten Material hergestellt sind und die Einfassung (2012) aus einem zweiten Kunststoffmaterial gebildet ist, das sich vom ersten Kunststoffmaterial unterscheidet.

16. Kapsel nach einem der vorangehenden Ansprüche, wobei die Seitenwand (2006) und die Eingangswand (2008) materialeinheitlich sind und einen Körper (2004) definieren, der zusammenhängend napfförmig hergestellt ist.

17. System, das eine Kapsel (2002) nach einem der vorangehenden Ansprüche und eine Extraktionsvorrichtung (2060) umfasst, die eine Aufnahme zum Empfangen der Kapsel (2002) und eine Zufuhrleitung (2064) von Extraktionsflüssigkeit unter Druck in die Aufnahme (2062) aufweist.

## Claims

1. A capsule (2002) for the pressurized extraction of a beverage, of the type comprising a side wall (2006) extending along an axis (X-X), an inlet wall (8) closing a first end of the side wall (2006) and an outlet wall (2010) closing a second end of the side wall (2006), delimiting a chamber (2014) for receiving a substance for preparing a beverage, the inlet wall (2008) being provided to break under the effect of a pressurized fluid and comprising a bottom portion (2016) and an area of less resistance (2026) provided to break under the effect of a pressurized fluid at the periphery of the bottom portion (2016), **characterized in that** the inlet wall (2008) comprises an axial portion (2022) extending along the axis (X-X) while coming in toward the inside of the capsule (2002) and the bottom portion (2016) is connected to an axial end of the axial portion (2022) situated toward the inside of the capsule (2002) by the area of less resistance (2026).

2. The capsule according to claim 1, wherein the area of less resistance (2026) extends axially.

3. The capsule according to claim 1 or 2, wherein the bottom portion (2016) is positioned axially withdrawn toward the inside of the capsule (2002) relative to a peripheral portion (2020) of the inlet wall (2008).

4. The capsule according to any one of the preceding claims, wherein the area of less resistance (2026) axially extends the axial portion (2022).

5. The capsule according to any one of the preceding claims, wherein the area of less resistance (2026) has a thickness smaller than that of the axial portion (2022).

6. The capsule according to any one of the preceding claims, wherein the bottom portion is a dome (2016).

7. The capsule according to claim 6, wherein the concave side of the dome (2016) is turned toward the inside of the capsule (2002).

8. The capsule according to claim 6 or 7, wherein the dome (2016) is sudden-acting and provided to turn over abruptly under the effect of a pressurized fluid.

9. The capsule according to any one of the preceding claims, wherein the outlet wall (2010) and the side wall (2006) comprise complementary raised snapping portions.

10. The capsule according to claim 9, wherein the outlet wall (2010) comprises a fastening rib (2036) provided on an edge of the outlet wall (2010) and the inner surface (2028) of the side wall comprises a complementary fastening groove (2038).

11. The capsule according to any one of the preceding claims, wherein the outlet wall (2010) comprises a peripheral fastening frame (2030) and a filter (2032) extending across the frame (2030).

12. The capsule according to claim 11, wherein the filter (2032) comprises orifices (2034).

13. The capsule according to claim 11 or 12, wherein the frame (2030) and the filter (32) are integral or the frame (2030) is attached on the filter (2032).

14. The capsule according to any one of the preceding claims, comprising a sealing membrane (2050) covering the outlet wall (2010).

15. The capsule according to any one of the preceding claims, comprising an annular rim (12) surrounding the second end of the side wall (2006) and extending radially outward from the second end of the side wall (2006), the side wall (2006) and the inlet wall (2008) being integral and made from a first material, and the rim (2012) being formed from a second plastic material, different from the first plastic material.

16. The capsule according to any one of the preceding claims, wherein the side wall (2006) and the inlet wall (2008) are integral and define a cup-shaped body (2004) made in a single piece.

17. A system comprising a capsule (2002) according to any one of the preceding claims and an extraction device (2060) comprising a housing (2062) designed to receive the capsule (2002) and a duct (2064) for bringing pressurized extracted liquid into the housing (2062).
